# EUROPEAN PATENT APPLICATION

(11) **EP 1 052 580 A1**
(43) Date of publication of application: **15.11.2000**
(21) Application number: 99901181.0
(22) Date of filing: 26.01.1999
(51) Int. Cl.: G06F 17/30

(54) **ACTION PROPOSING DEVICE**

(30) Priority: 05.02.1998 JP 2411398
(71) Applicant: FUJITSU LIMITED, Kawasaki-shi, Kanagawa 211-8588 (JP)
(72) Inventor: NAITO, Hirohisa, Fujitsu Limited, Kawasaki-shi, Kanagawa 211-8588 (JP); TAKAYAMA, Kuniharu, Fujitsu Limited, Kawasaki-shi, Kanagawa 211-8588 (JP); SEKIGUCHI, Minoru, Fujitsu Limited, Kawasaki-shi, Kanagawa 211-8588 (JP)
(74) Representative: Stebbing, Timothy Charles
(86) International application number: JP9900314
(87) International publication number: WO9940524

(57) **Abstract**

An action suggestion apparatus includes a unit 2 for searching according to information about circumstances the procedure database 3 storing a procedure containing conditions of the circumstances and actions, and determining an action to be taken; a unit 4 for suggesting the determined action to a user; and a unit 5 for creating or amending the procedure database based on the action of the user. Relating to an apparatus and a method for suggesting an action using a procedure database, a storage medium storing procedure data used therefor, and a storage medium storing an action suggesting program using the procedure database, realized are an apparatus and a method for automatically suggesting an appropriate action in response to various information obtained in the existing circumstances, a storage medium storing procedure data used therefor, and a storage medium storing an action suggesting program using the procedure database.

## Description

### Technical Field

The present invention relates to an apparatus and a method for suggesting an action using a procedure database, a storage medium storing procedure data used therefor, and a storage medium storing an action suggesting program using the procedure database, and more specifically to an apparatus and a method for suggesting an action in response to various information obtained in the existing circumstances, a storage medium storing procedure data used therefor, and a storage medium storing an action suggesting program using the procedure database.

For example, the present invention can be used for a device such as a car navigation system, a portable information processing terminal, etc., provided to take an action depending on the circumstances.

### Background Art

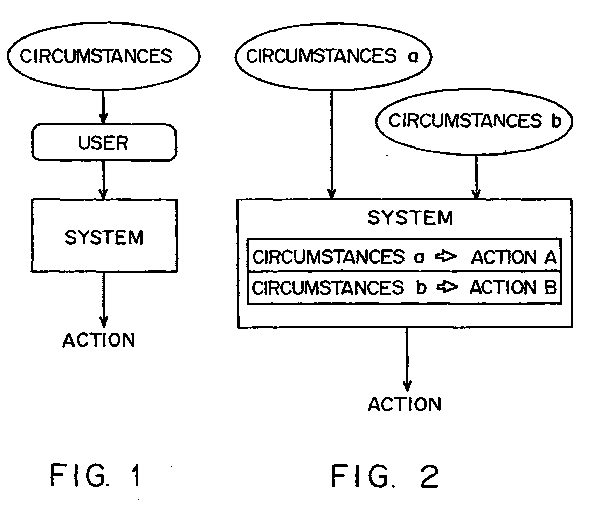

Conventionally, a desired action has been realized by a user considering the circumstances which change with time in various manners, and instructing a system to take a necessary action (operation of the system) by performing an operation of, for example, pressing a button as shown in FIG. 1.

In addition, as shown in FIG. 2, predetermined rules have been made beforehand to take a corresponding action depending on the situation such that the action can be activated when the corresponding rule is satisfied.

When a car navigation system and a portable information processing terminal are used, the circumstances change in various manners with time and movement of a user. On the other hand, there is an environment in which various information can be obtained in real time by connection to a vehicle information and communication system (VICS) and the Internet.

For example, in the case of a car navigation system, the car using the system can also provide various information. Under the conditions, the user (driver) may be required to drive a car as the primary job and perform various processes depending on the circumstances as the secondary job. Under the circumstances, determining and selecting an appropriate operation depending on various aspects of the circumstances, and instructing the device such as the car navigation system, and the like to execute the operation are a big burden to the user.

The present invention aims at providing an apparatus and a method for automatically suggesting an action to a user depending on the circumstances which change in various manners with time, a storage medium storing procedure data used therefor, and a storage medium storing an action suggesting program using a procedure database. Furthermore, another object of the present invention is to provide an apparatus and a method for suggesting an action and updating a procedure database based on an execution result of the action taken according to the user selection, a storage medium storing procedure data used therefor, and a storage medium storing an action suggesting program using a procedure database.

### Disclosure of Invention

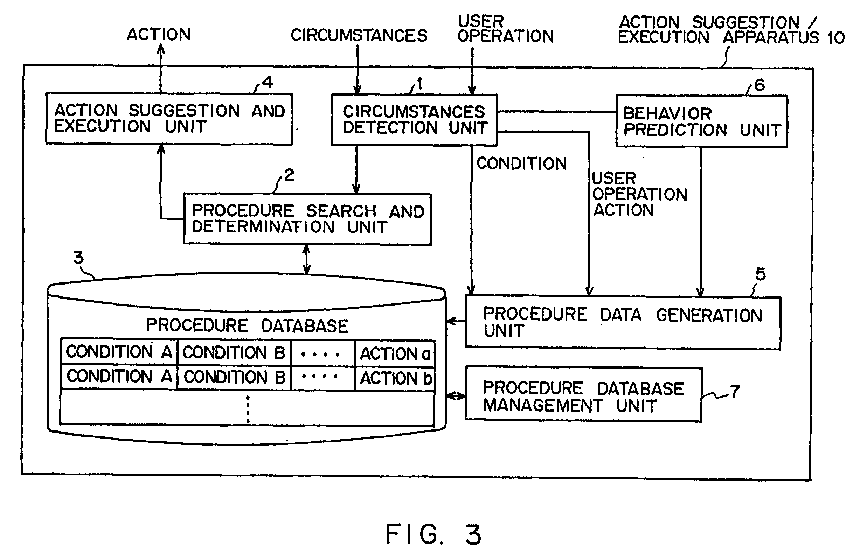

The present invention includes each of the components as shown in FIG. 3 to solve the problems with the conventional technology and attain the above described objects.

FIG. 3 shows the principle of the present invention.

A circumstances detection unit 1 has the function of detecting the circumstances such as time, place, situation, and so on. The circumstances detection unit 1 has the function of detecting the action selected by the user by operating an input device.

A procedure search and determination unit 2 has the functions of searching procedures in a procedure database 3 according to the information detected by The circumstances detection unit 1, and determining the procedure corresponding to the condition of the existing circumstances.

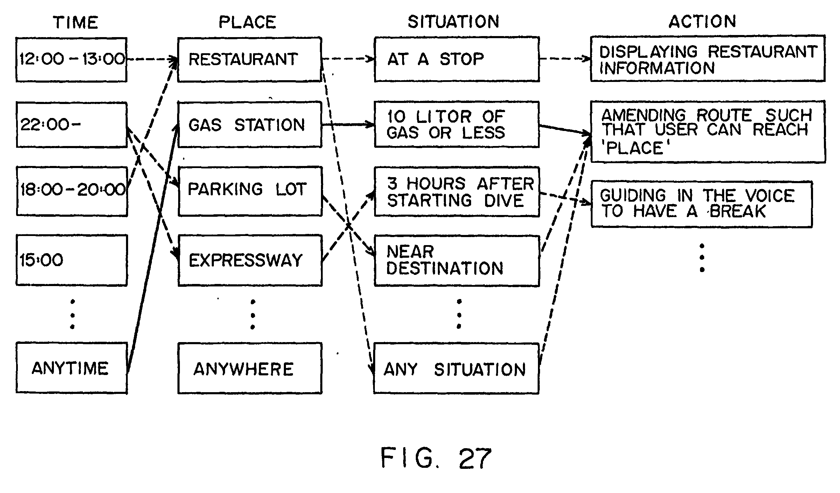

The procedure database 3 stores a procedure containing a set of a condition of the circumstances and an action to be taken. A condition of the circumstances in each procedure refers to, for example, time, place, situation, and so on. Each procedure is defined by a set of, for example, time, place, situation, and action. The procedure database 3 contains values defined for each condition or action without overlapping. Each procedure is designed in a data structure of a network in which a necessary condition and action are connected with each other through a link as described later by referring to FIG. 27.

An action suggestion and execution unit 4 has the function of suggesting or executing one or more actions in the procedure determined by the procedure search and determination unit 2.

A procedure data generation unit 5 has the function of automatically generating a procedure to be entered in the procedure database 3 according to the information about the circumstances when the action is taken. Practically, when the action is selected by the user operation, or when it is selected by a behavior prediction unit 6, the time, place, and situation is stored, and generates procedure data containing time, place, situation, and action based on the above described information and the corresponding action.

The behavior prediction unit 6 has a behavior list describing the behavior of a user (operation of a user), and a behavior-action list describing the action to be taken in response the behavior of the user, predicts the behavior of the user from the behavior list according to the information detected by the circumstances detection unit 1, and selects the corresponding action from the behavior-action list based on the predicted behavior.

A procedure database management unit 7 has the function of managing the procedure database 3. For example, the procedure database management unit 7 can delete the procedure which has not been used for a predetermined period in the procedures stored in the procedure database 3. In addition, when any of the conditions of time, place, and situation satisfies a predetermined integration condition in the procedure database 3, and when there are a plurality of procedures in which the remaining conditions and actions are the same, the procedure database management unit 7 has the function of integrating the plurality of procedures into one procedure. For example, when the condition corresponding to the integration condition in a procedure is 'time', the value of the condition is changed into 'anytime' for integration as a single procedure. When the condition corresponding to the integration condition in a procedure is 'place', the value of the condition is changed into 'anywhere' for integration as a single procedure. When the condition corresponding to the integration condition in a procedure is 'situation', the value of the condition is changed into 'any situation' for integration as a single procedure.

Furthermore, when the condition of either time or place in the procedure database 3 is replaced with a condition having a broad range by a predetermined integration condition, and when the remaining conditions and actions are the same, the procedure database management unit 7 replaces the value of the condition of the time or the place corresponding to the integration condition with the value of the broad integrated condition for a single procedure. In addition, when the range corresponding to the condition of the procedure in the procedure database 3 is too broad, the procedure database management unit 7 replaces the value of the condition of the procedure with a value for a narrower range.

When the procedure search and determination unit 2 extracts a plurality of procedures satisfying the conditions from the procedure database 3, the action suggestion and execution unit 4 suggests to the user all candidates for the action to be taken in the extracted procedure, and allows the user to select the action from among the candidates.

Furthermore, there is another method of allowing the user to select the action to be taken when the procedure search and determination unit 2 extracts a plurality of procedures satisfying the conditions from the procedure database 3. That is, a procedure in the procedure database 3 is assigned a mark for priority, and a procedure assigned a higher mark for priority is extracted when there are a plurality of procedures satisfying the conditions of the circumstances. At this time, as a method of assigning a mark for priority of a procedure, for example, when the user uses the procedure, a predetermined number is added to the assigned mark. If the procedure is suggested to the user, but the user does not use the procedure, then a predetermined number is subtracted from the assigned mark. Thus, reasonable priority can be automatically assigned.

In addition, there is another method of allowing the user to select the action to be taken when the procedure search and determination unit 2 extracts a plurality of procedures satisfying the conditions from the procedure database 3. That is, a procedure satisfying the condition is assigned a flag such that the procedure can be suggested or executed only once while the condition is satisfied. Thus, the action can be prevented from being repeatedly suggested or executed.

When the procedure database 3 is stored in a portable storage medium such as a PC card, an IC memory card, and so on to be used for another device, a customized procedure can be continuously used even if a new system is purchased. Furthermore, an existing customized procedure can be applied to various devices and apparatuses.

The present invention functions as follows.

The procedure database 3 storing procedures each being defined as a set of a condition of the circumstances such as time, place, situation, and so on is first provided. The circumstances detection unit 1 detects the condition of searching the procedure database 3 from the time, place, situation, and so on including user input information. Based on the detected condition, the procedure search and determination unit 2 extracts the corresponding procedure from the procedure database 3, and passes the action corresponding to the procedure to the action suggestion and execution unit 4. The action suggestion and execution unit 4 suggests or executes the action. Thus, the action can be automatically suggested or executed depending on the circumstances.

When the action is executed by a user operation, the procedure data generation unit 5 automatically generates a procedure based on the information obtained from the circumstances detection unit 1 and the executed action, and enters the procedure in the procedure database 3.

Furthermore, a behavior list describing the behavior of a user taken depending on the circumstances, and a behavior-action list describing the action taken in response to the behavior are provided. Then, based on the conditions such as the time, place, situation, and so forth obtained from the circumstances detection unit 1, the behavior prediction unit 6 predicts the behavior to be taken by the user, and determines the action to be executed based on the predicted behavior of the user. The procedure data generation unit 5 automatically generates the procedure from the above described information and action, and enters the procedure in the procedure database 3.

In this method, the conditions of the circumstances around the user are accumulated when the present invention is used, and the action can be suggested and executed at an appropriate timing depending on the inclination of the user.

By updating the procedure based on the utilization of the procedure, the procedure database 3 can be optimally maintained for the user. Furthermore, the procedure database 3 can be prevented from being excessively increased in storage capacity.

### Brief Description of Drawings

FIG. 1 shows an example of the conventional technology.
FIG. 2 shows another example of the conventional technology.
FIG. 3 shows the principle of the present invention.
FIG. 4 shows an example of a time condition of the conditions in a procedure.
FIG. 5 shows an example of a place condition of the conditions in a procedure.
FIG. 6 shows an example of a situation condition of the conditions in a procedure.
FIG. 7 shows an example of action to be taken when the procedure conditions are satisfied.
FIG. 8 shows an example of the configuration of the procedure database 3.
FIG. 9 shows an example of a block diagram of the action suggestion apparatus according to the first embodiment of the present invention.
FIG. 10 is a flowchart of the process of suggesting and executing action.
FIG. 11 is a flowchart of the process of generating a procedure from the operation of the user.
FIG. 12 shows an example of a block diagram of the action suggestion apparatus according to the second embodiment of the present invention.
FIG. 13 shows an example of a behavior list 62.
FIG. 14 shows an example of a behavior-action list 64.
FIG. 15 is a flowchart of the process of generating a procedure from the behavior of a user.
FIG. 16 shows an example of a time condition of the conditions in a procedure.
FIG. 17 shows an example of a place condition of the conditions in a procedure.
FIG. 18 shows an example of a situation condition of the conditions in a procedure.
FIG. 19 shows an example of action to be taken when the procedure conditions are satisfied.
FIG. 20 shows an example of the configuration of the procedure database 3.
FIG. 21 shows the process (1) of integrating procedures according to a condition value.
FIG. 22 shows the process (2) of integrating procedures according to a condition value.
FIG. 23 shows the process (3) of integrating procedures according to a condition value.
FIG. 24 shows the process (4) of integrating procedures according to a condition value.
FIG. 25 shows the process (5) of integrating procedures according to a condition value.
FIG. 26 shows the process (6) of integrating procedures according to a condition value.
FIG. 27 shows an example of the configuration of the procedure database using a link.
FIG. 28 shows an example of a time condition in a procedure when the present invention is applied to a portable communications terminal.
FIG. 29 shows an example of a place condition in a procedure when the present invention is applied to a portable communications terminal.
FIG. 30 shows an example of a situation condition in a procedure when the present invention is applied to a portable communications terminal.
FIG. 31 shows an example of action to be taken when the present invention is applied to a portable communications terminal, and the procedure conditions are satisfied.
FIG. 32 shows an example of the configuration of the procedure database 3 when the present invention is applied to a portable communications terminal.
FIG. 33 shows the configuration of the hardware according to the present invention.

### Best Mode for Carrying Out the Invention

The present embodiments are described below by referring to the attached drawings.

### [First Embodiment]

As the first embodiment, an example of applying the present invention to a car navigation system is described below. In this example, the procedure database 3 is used as comprising time, place, situation, and action. In these elements, time, place, and situation are the conditions of a procedure, while action refers to an operation activated when the condition of a procedure is satisfied.

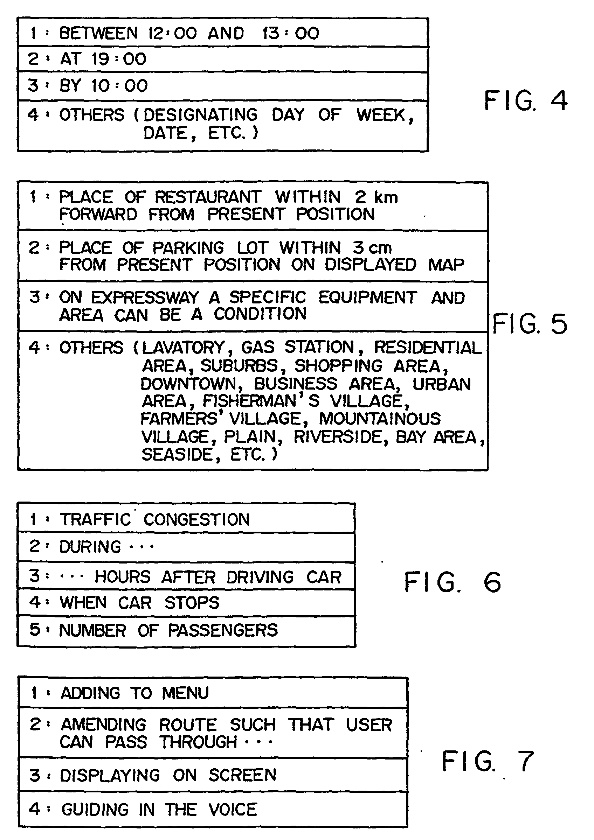

First, an example of the data stored in the procedure database 3 is described by referring to FIGS. 4 through 8.

FIG. 4 shows an example of a time condition of the conditions in a procedure.

A time condition can be, for example, the contents of 'between 12:00 and 13:00','at 19:00', and 'by 10:00.' In addition, the value indicating the day of a week or the date can be used as a condition.

FIG. 5 shows an example of a place condition of the conditions in a procedure.

A place condition can be, for example, the place and the range such as 'the place of a restaurant within 2km forward from the present position', 'the place of a parking lot within 3cm from the present position on the displayed map', 'on a expressway', and so on. Otherwise, a specific equipment and area can be a condition. The contents of a range can be: 'lavatory', 'gas station', 'residential area', 'suburbs', 'shopping area', 'downtown', 'business areas', 'urban area', 'fishermen's village', 'farmers' village', 'mountainous village', 'plain', 'riverside', 'bay area', 'seaside', 'forest area', 'mountainous area', and so on.

FIG. 6 shows an example of a situation condition of the conditions in a procedure.

A situation condition can be, for example, 'traffic congestion', 'during ...', '... hours after driving the car', 'when the car stops', 'number of passengers', and so on. The situation can be determined by the input from, for example, a gyrosensor.

FIG. 7 shows an example of action to be taken when the procedure conditions are satisfied.

The action can be defined as an operation requested to the system, for example, 'adding to the menu', 'amending the route such that the user can pass through ...', 'displaying on the screen', 'guiding in the voice', and so on. The action can be a combination of a plurality of operations.

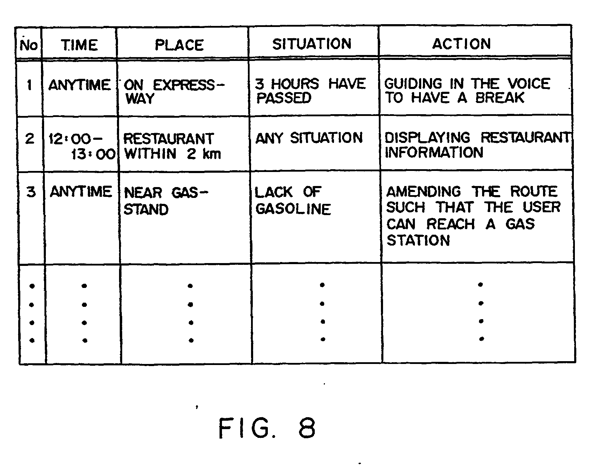

FIG. 8 shows an example of the configuration of the procedure database 3.

Each of the procedures stored in the procedure database 3 comprises a set of a procedure condition and action, for example, 'time, place, situation, action'. For example, the procedure No.1 shown in FIG. 8 contains 'anytime, on expressway, 3 hours have passed, guiding in the voice to have a break' indicating a request to the car navigation system to have a break anytime after 3 hour drive on expressway.

The procedure No.2 shown in FIG. 8 contains '12:00-13:00, restaurant within 2km, any situation, displaying restaurant information' instructing the car navigation system to take action to display restaurant information in any situation when there are restaurants within 2km from the car at 12:00 through 13:00. Furthermore, the procedure No.3 shown in FIG. 8 contains 'anytime, near gas station, lack of gasoline, amending the route such that the user can reach a gas station' instructing the car navigation system to reach a gas station when the car is running short of gas near the gas station.

The rule (procedure condition) of the procedure database 3 can be represented, for example, in a predicate logic representation using probability and a function. For example, when a rule of executing action D if the place is A, the time is B, and the situation is C can be represented in the predicate logic representation as follows.

if A and B and C then D

The rule of executing action D if the place is A, and either the condition that the time is B or the condition that the situation is C is satisfied can be represented in the predicate logic representation as follows.

if A and (B or C) then D

The rule of executing action D if the conditions of A and B are not satisfied, and the condition of C is satisfied can be represented in the predicate logic representation as follows.

if (not A) and (not B) and C then D

Furthermore, it also can be represented as follows.

if (((not C1) and C2) or (C3 or (not C4))) and C5 then D

The condition can be specified by a non-absolute representation. For example, a time condition can be represented as '30 minutes after one hour from the point P.' A place condition can be relatively represented as 'between 3km and 1km before the point at which the car will be running at 12:00.' These conditions can be set after the point P is actually determined, or can be set using the result of a prediction output by a prediction module.

Furthermore, a procedure can be assigned probability, or a processing method can be changed with probability. For example, when the condition '12:00-13:00, within 1km from restaurants, at a stop' is satisfied, data is collected to check the probability at which the user has taken action of displaying restaurant information. Based on the data, the procedure can be represented as, for example, '12:00-13:00, within 1km from restaurants, at a stop: displaying restaurant information; 30%.' When such a procedure is contained in the database, the action of displaying restaurant information at the probability of 30%' is taken. Thus, there is the merit that a user who does not frequently go to restaurants is not annoyed by frequent suggestions. When a plurality of suggestions are output for the same condition, the procedure can be set as '12:00-13:00, within 1km from restaurants, at a stop: displaying restaurant information; 60%, amending the route such that the user can stop at a restaurant; 40%.' Furthermore, the probability can be automatically changed depending on the situation of a suggestion.

In addition, the rule of the procedure database 3 can also implement a fuzzy rule, a neural network, and so on.

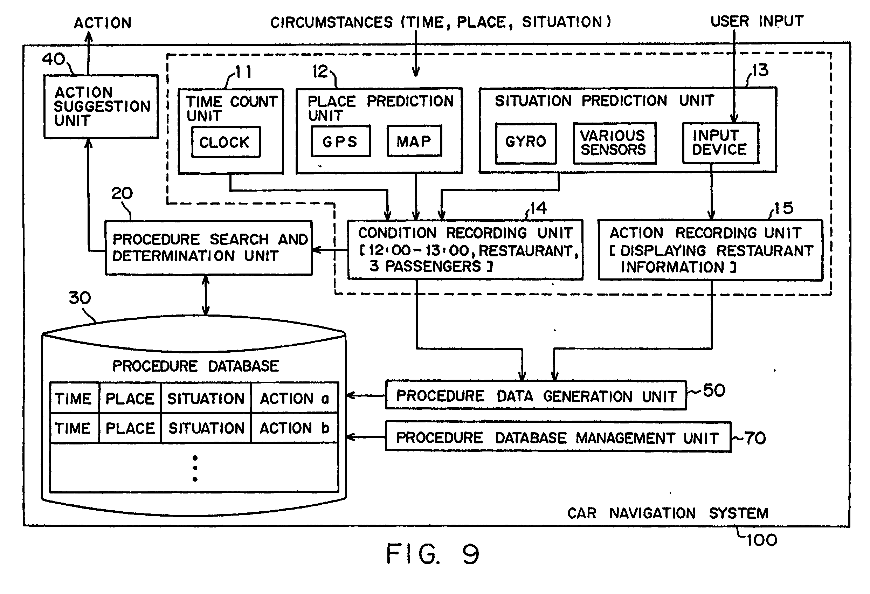

FIG. 9 shows an example of a block diagram of the action suggestion apparatus according to the first embodiment of the present invention.

In a car navigation system 100, a time count unit 11, a place prediction unit 12, a situation prediction unit 13, a condition recording unit 14, and an action recording unit 15 realize the circumstances detection unit 1 shown in FIG. 3. A procedure search and determination unit 20 realizes the procedure search and determination unit 2 shown in FIG. 3. A procedure database 30 realizes the procedure database 3 shown in FIG. 3. An action suggestion unit 40 realizes the action suggestion and execution unit 4 shown in FIG. 3. A procedure data generation unit 50 realizes the procedure data generation unit 5 shown in FIG. 3. A procedure database management unit 70 realizes the procedure database management unit 7 shown in FIG. 3. The action suggestion unit 40 can be a display device and the speaker of the car navigation system.

The procedure database 30 has the configuration as shown in FIGS. 4 through 8.

The action is suggested depending on the situation as follows.

The time count unit 11 counts the current time using, for example, a clock, or according to the information from the global positioning system (GPS). The place prediction unit 12 predicts the current position according to the GPS and the mp information system. The situation prediction unit 13 predicts the situation according to the information from each sensor such as a gyrosensor, etc. and an input device through which information is input by users. The condition recording unit 14 records the information from the time count unit 11, the place prediction unit 12, and the situation prediction unit 13. The action recording unit 15 records the action determined by the input device of the situation prediction unit 13.

The current time (for example, 12:15) is detected by the time count unit 11. The place where the car is running is estimated to be '1km from restaurants' according to the position detected by the GPS of the place prediction unit 12 and the map information. Furthermore, the situation is estimated as '3 passengers' by various sensors of the situation prediction unit 13.

The condition recording unit 14 records the condition '12:00-13:00, restaurant; 1km, 3 passengers.' The procedure search and determination unit 20 searches the procedure database 30, and extracts the procedure No.2 shown in FIG. 8 corresponding to the recorded condition. The action suggestion unit 40 suggests the defined action of 'displaying restaurant information.' If the same situation is detected, the similar action is automatically suggested and executed.

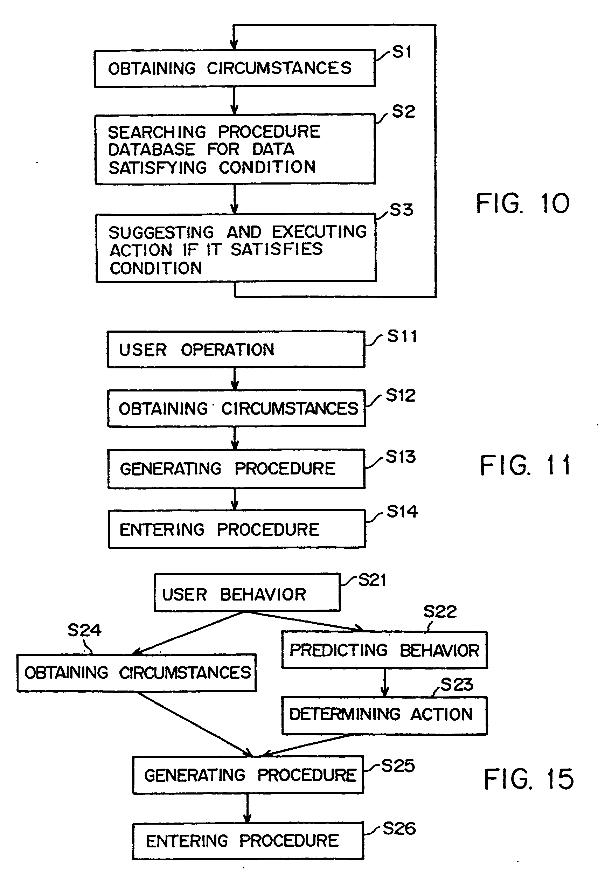

FIG. 10 is a flowchart of the process of suggesting and executing action.

In step S1, as the circumstances, the time count unit 11 obtains the time, the place prediction unit 12 obtains the place, the situation prediction unit 13 obtains the situation, and the condition recording unit 14 stores these data. In step S2, the procedure search and determination unit 20 checks whether or not the procedure data stored in the procedure database 30 matches the circumstances obtained in step S1. In step S3, if matching data exists as a result of the check in step S2, the action stored in the procedure database 30 is suggested by the action suggestion unit 40 to the user so that the action can be executed. Then, the processes in steps S1 through S3 are repeated. The process in step S1 in which the above described circumstances are obtained can be performed based on the capability of each sensor and the performance of the CPU. If the scale of the condition to be recorded by the condition recording unit 14 is determined, each piece of information can be obtained based on it. If the procedure search and determination unit 20 takes a long time on its check, data can be preliminarily read and checked.

On the other hand, a new procedure can be generated as follows when certain action is taken.

For example, assume that the user has selected the action 'displaying restaurant information' under the circumstances in which the current time is 19:15, the current place is 1km apart from a restaurant, and the number of passengers is 3. In response to the selection of the action, the condition recording unit 14 records '19:00-20:00, restaurant; 1km, 3 passengers' as the condition corresponding to the action according to the information from the time count unit 11, the place prediction unit 12, and the situation prediction unit 13. The action recording unit 15 records the action 'displaying restaurant information' which has been selected through the input device.

The procedure data generation unit 50 generates a new procedure '19:00-20:00, restaurant; 1km, 3 passengers, displaying restaurant information' according to the information from the condition recording unit 14 and the action recording unit 15, and records the procedure in the procedure database 30. The action recorded by the action recording unit 15 can refer to either a one-step operation or a series of operations. A series of operations refers to operations to be performed to display restaurant information.

Thus, the newly added procedure is hereinafter automatically executed if the conditions are satisfied. That is, the action once taken by the user can be automatically taken when the same situation occurs.

Furthermore, when the user takes the action of amending the route such that the user can reach a restaurant under the same circumstances, that is, under the circumstances in which the current time is 19:15, the current place is 1km apart from a restaurant, and the number of passengers is 3, the procedure data generation unit 50 generates a new procedure '19:00-20:00, restaurant; 1km, 3 passengers, amending the route such that the user can reach a restaurant' based on the condition '19:00-20:00, restaurant; 1km, 3 passengers' recorded in the condition recording unit 14, and the action of 'amending the route such that the user can reach a restaurant', and records the new procedure in the procedure database 30.

If the circumstances occur again, the procedure search and determination unit 20 searches for the two procedures '19:00-20:00, restaurant; 1km, displaying restaurant information', and '19:00-20:00, restaurant; 1km, amending the route such that the user can reach a restaurant,' and provides the user with the suggestions 'displaying restaurant information' and 'amending the route such that the user can reach a restaurant' so that the user can select his or her action.

The procedure search and determination unit 20 can assign marks indicating the priority of the procedures under the same condition such that the procedure having the highest mark of the priority can be selected. The mark of the priority of a procedure can be increased by predetermined points when the user takes the action for which the procedure is suggested. If the action is suggested but not actually taken by the user, then predetermined points are subtracted from the mark assigned to the corresponding procedure. The marks are automatically updated.

When an action relating to a certain procedure is suggested and selected, a procedure having the same condition is continuously searched for unless the circumstances have changed. Then, the procedure search and determination unit 20 assigns a flag to a procedure which once satisfies the condition so that the procedure cannot be extracted while the same condition is continuously recorded in the condition recording unit 14.

Thus, since the position of a restaurant near the current position of the car of the user is automatically displayed depending on the circumstances on the map of the display device of the car navigation system to which the action suggestion unit 40 is applied, the user does not have to determine and perform the operation of 'displaying the position of a restaurant on the map of the display device of the car navigation system at lunch time.'

FIG. 11 is a flowchart of the process of generating a procedure from the operation of the user.

In step S11, the user performs an operation through the input device. Then, in step S12, the situation prediction unit 13 obtains the situation, and then obtains the circumstances as a set of the circumstances obtained by the time count unit 11 or the place prediction unit 12 and the operation of the user. In step S13, the procedure data generation unit 50 generates procedure data. In step S14, the generated procedure data is entered in the procedure database 30 so that it can be used for suggestion and execution.

As described above, the information about the circumstances is fed back each time the user makes the system take any action, and the procedure in the procedure database 30 is updated, thereby allowing the action appropriate in the circumstances of the user to be suggested or executed.

### [Second Embodiment]

The procedure database according to the second embodiment of the present invention is similar in configuration to that of the first embodiment of the present invention.

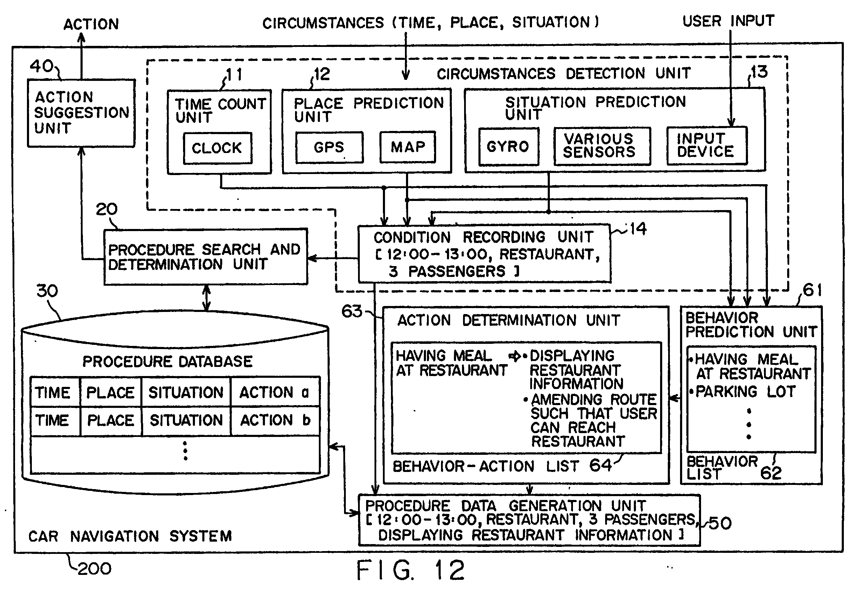

FIG. 12 shows an example of a block diagram of the action suggestion apparatus according to the second embodiment of the present invention.

In a car navigation system 200, the time count unit 11, the place prediction unit 12, the situation prediction unit 13, and the condition recording unit 14 realize the circumstances detection unit 1 shown in FIG. 3. The procedure search and determination unit 20 realizes the procedure search and determination unit 2 shown in FIG. 3. The procedure database 30 realizes the procedure database 3 shown in FIG. 3. The action suggestion unit 40 realizes the action suggestion and execution unit 4 shown in FIG. 3. The procedure data generation unit 50 realizes the procedure data generation unit 5 shown in FIG. 3. A behavior prediction unit 61 and a action determination unit 63 realize the behavior prediction unit 6 shown in FIG. 2. The procedure database management unit 70 realizes the procedure database management unit 7 shown in FIG. 3. The action suggestion unit 40 can be a display device and the speaker of the car navigation system.

The procedure database 30 has the configuration as shown in FIGS. 4 through 8.

The action depending on the situation is suggested in the same process as in the first embodiment of the present invention, and therefore, the detailed explanation is omitted here.

According to the second embodiment of the present invention, the behavior of the user is predicted according to the information about the circumstances, and a procedure of the action appropriate for the behavior is added to the procedure database 30. The behavior prediction unit 61 comprises the behavior list 62 describing the behavior of the user taken based on a certain condition (time, place, situation). The action determination unit 63 comprises the behavior-action list 64 describing the action taken in response to the behavior of the user predicted by the behavior prediction unit 61. These behavior list 62 and behavior-action list 64 are preliminarily generated by the designer of the car navigation system 200 or the user.

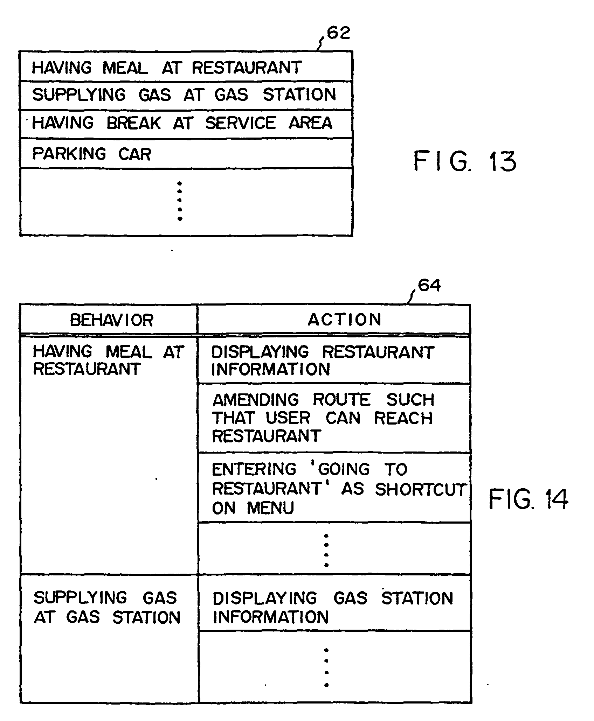

FIG. 13 shows an example of a behavior list 62. FIG. 14 shows an example of a behavior-action list 64.

As shown in FIG. 13, the behavior list 62 contains the descriptions of behavior of a user such as 'having a meal at a restaurant', 'supplying gas at a gas station', 'having a break at a service area', 'parking a car', and so on. As shown in FIG. 14, the behavior-action list 64 contains the descriptions of the action such as 'displaying restaurant information', 'amending the route such that the user can reach a restaurant,' 'entering 'going to a restaurant' as a shortcut on the menu,' and so on as related action for the behavior 'having a meal at a restaurant.'

The procedure of the procedure database 30 is generated based on the prediction of behavior as follows. For example, assume that the user stops the car for about one hour at a restaurant to have a meal. The situation prediction unit 13 predicts from each sensor such as a gyrosensor, and so on that the car has stopped and the number of passengers is 3. The time count unit 11 detects the time at which the car stopped (12:15) and the duration of the stop (one hour), and predicts the place (restaurant) where the car stopped from the position detected by the GPS and the map information. The information is passed to the condition recording unit 14 and the behavior prediction unit 61.

The behavior prediction unit 61 selects the predicted behavior of the user based on the behavior list 62 according to the information about the time, place, situation, and so on. In this example, the behavior 'having a meal at a restaurant' is selected from among the behaviors defined in the behavior list 62 as shown in FIG. 13 according to the information '1 hour from 12:15, at a restaurant, 3 passengers, at a stop.' The behavior 'having a meal at a restaurant' as a result of the prediction is passed to the action determination unit 63.

Based on the prediction result, the action determination unit 63 selects the action 'displaying restaurant information' from the action corresponding to 'having a meal at a restaurant' defined in the behavior-action list 64 shown in FIG. 14.

The procedure data generation unit 50 generates a new procedure '12:00-13:00, restaurant, 3 passengers, displaying restaurant information' from the condition recorded in the condition recording unit 14 as a trigger condition of the behavior, and the action selected by the action determination unit 63, and then the new procedure is recorded in the procedure database 30.

The condition when a procedure is generated by the procedure data generation unit 50 is normally the condition used when the behavior is taken. In addition, the condition at 10 minutes before can be recorded and used.

Thus, the procedure database 30 is automatically updated with the procedure applicable to the user environment added.

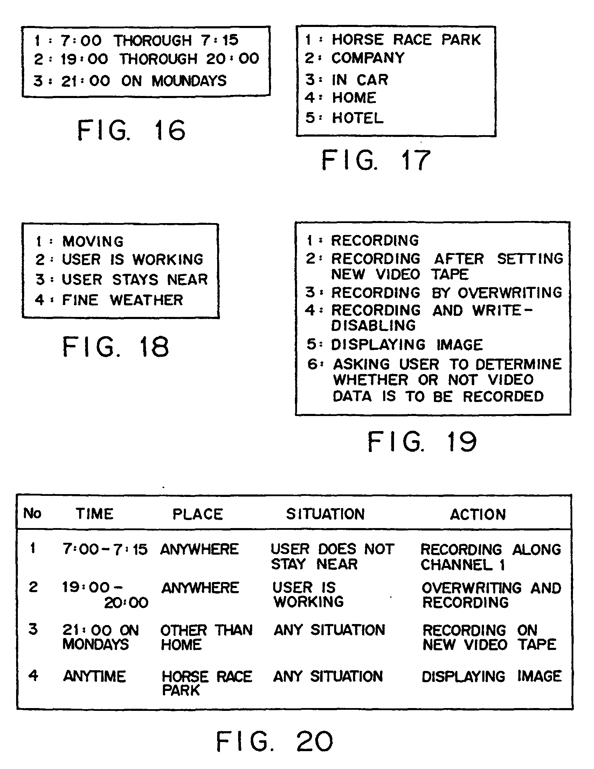

FIG. 15 is a flowchart of the process of generating a procedure from the behavior of a user.

In step S21, the user performs an operation using an input device. Then, in step S22, the behavior prediction unit 61 predicts the behavior of the user based on the operation of the user. Then, when the user takes the behavior, the action determination unit 63 determines the action which can be supported by the car navigation system 200 in step S23. Then, in step S24, the situation prediction unit 13 concurrently obtains the situation, and obtains the circumstances as a set of the situation obtained by the time count unit 11 or the place prediction unit 12 and the user operation. In step S25, the procedure data generation unit 50 generates procedure data. In step S26, the generated procedure data is entered in the procedure database 30 so that the data can be used in suggestion and execution. When the user takes behavior, and executes a suggested action supported by the car navigation system 200, an amendment is made to the condition. The amendment is recorded in the behavior-action list 64. For example, if the behavior is 'having a meal at a restaurant,' and the action is 'amending the route such that the user can reach a restaurant,' then the information '-30 min, radius 1km' is recorded in the behavior-action list 64. If the information is thus recorded, the suggestion for 'amending the route such that the user can reach a restaurant' is issued at 11:30 through 12:30 even if the time condition recorded in the condition recording unit 14 is '12:00-13:00.' Otherwise, even if the place condition recorded in the condition recording unit 14 refers to 'a place at which a restaurant exists within 2km forward from the current position,' a procedure data is generated such that an action suggestion can be issued within 1km from a restaurant, and is recorded in the procedure database 30.

### [Third Embodiment]

Described below is an example of applying the present invention to a video recording system as the third embodiment of the present invention.

FIGS. 16 through 20 show an example of data stored in the procedure database 3.

FIG. 16 shows an example of a time condition in a procedure.

A time condition can be represented by '7:00 thorough 7:15,' '19:00 through 20:00,' '21:00 on Mondays,' and so on.

FIG. 17 shows an example of a place condition in a procedure.

A place condition can be represented by, for example, 'horse race park,' 'company,' 'in a car,' 'home,' 'hotel,' and so on.

FIG. 18 shows an example of a situation condition in a procedure.

A situation condition can be represented by, for example, 'moving,' 'the user is working,' 'the user stays near' 'fine weather,' and so on.

FIG. 19 shows an example of an action to be taken when a procedure condition is satisfied.

As an action, for example, operations requested to the system such as 'recording,' 'recording after setting a new video tape,' 'recording by overwriting,' 'recording and write-disabling,' 'displaying an image,' 'asking the user to determine whether or not video data is to be recorded,' and so on are defined. An action can be a combination of a plurality of operations.

FIG. 20 shows an example of the configuration of the procedure database 3.

Each procedure stored in the procedure database 3 includes a set of a procedure condition and an action, and can be represented by the items, for example, 'time, place, situation, action.' For example, the procedure No. 1 '7:00-7:15, anywhere, the user does not stay near, recording along ch1 (channel 1).' This indicates recording along channel 1 unless the user stays near at 7:00 through 7:15. The channel along which video data is to be recorded can be specified. In this example, channel 1 is specified.

The procedure No. 2 shown in FIG. 20 indicates '19:00-20:00, anywhere, the user is working, overwriting and recording.' It means video data is overwritten and recorded if the user is working anywhere at 19:00 through 20:00. The procedure No. 3 shown in FIG. 20 indicates '21:00 on Mondays, other than home, any situation, recording on a new video tape.' It means video data can be recorded on a new video tape in any situation when the user is not home at 21:00 on Mondays. Furthermore, the procedure No. 4 shown in FIG. 20 indicates 'anytime, horse race park, any situation, displaying an image.' It means a video image can be recorded anytime in any situation when the user is in a horse race park.

A new procedure is generated when the action according to the third embodiment of the present invention is taken using the procedure database as follows.

When the user repeats the operation of 'video recording' on a predetermined day of a week, the circumstances detection unit 1 obtains the information about 'a day of a week,' 'starting/ending time,' and so on which and at which the video recording is performed. Then, the procedure data generation unit 5 generates a procedure defined by a specified day of a week, a specified time, and the action 'video recording.' The generated procedure is recorded in the procedure database 3.

Then, when the circumstances detection unit 1 detects a specified time (day or a week, time), the procedure search and determination unit 2 searches the procedure database 3 based on the detected time condition, ad extracts a corresponding procedure. The action suggestion and execution unit 4 suggests to the display device, and so on the action 'video-recording' indicated by the extracted procedure, or automatically performs video-recording.

Thus, the user can perform video-recording by the suggestion or execution of an action (video-recording operation) even if the user has forgotten to perform the video-recording operation.

The third embodiment of the present invention is different from the first and second embodiments which are based on that the user and the car navigation system exist at the same place. That is, the third embodiment of the present invention can be provided at a place separately from the user. When the user and the video recording system are apart from each other, the place situation detected by the circumstances detection unit relates to the user or the video recording system, or can switch from a user mode to a video recording mode, and vice versa. It is obvious that data can be transmitted online, or through a radio transmission and reception system.

### [Fourth Embodiment]

The procedure database 30 should be well maintained so that a procedure useful to the user can be suggested in making determination, and so that the capacity of the procedure database 30 can be reduced.

An example of the configuration of the apparatus according to the fourth embodiment of the present invention is the same as that shown in FIG. 9.

The procedure database management unit 70 deletes a procedure which is not used for a predetermined period from the procedure database 30. Thus, the capacity of the procedure database 30 can be reduced down to a certain level.

When the value of the time condition of the procedure in the procedure database 30 corresponds to the a predetermined integration condition, and when the remaining conditions and action are the same, the procedure database management unit 70 converts the time value of the procedure corresponding to the integration condition into 'anytime' to generate an integrated procedure.

Similarly, for the place and situation conditions, the procedure database management unit 70 converts the place value into 'anytime' and the situation value into 'any situation' to generate an integrated procedure when the place and situation conditions correspond to a predetermined integration conditions, and the remaining conditions and actions are the same.

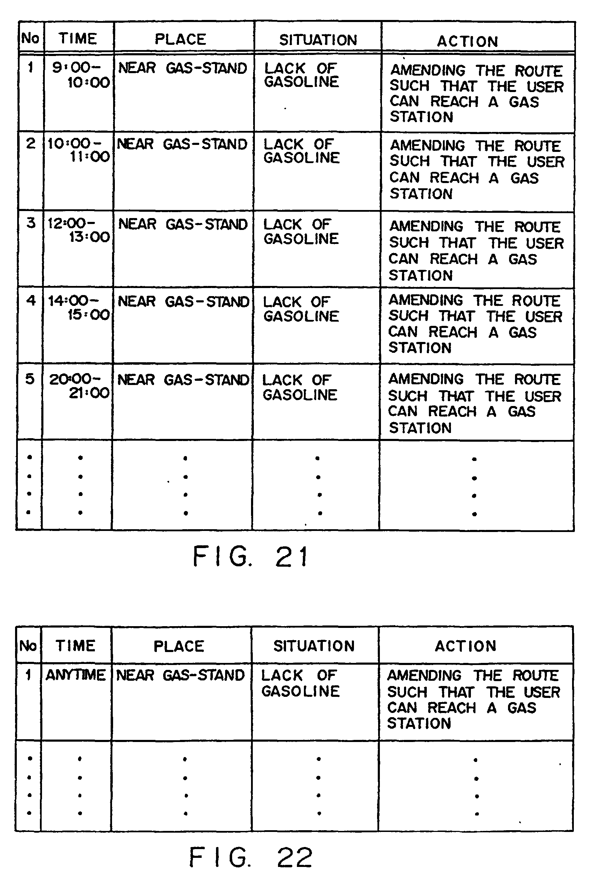

FIGS. 21 through 26 show a process of integrating procedures based on condition values.

As shown in FIG. 21, if there are a plurality of procedures in which the time conditions in the procedure database are '9:00-10:00,' '10:00-11:00,' '12:00-13:00,' '14:00-15:00,' and '20:00-21:00,' and the other conditions and actions are the same ('*, near gas station, lack of gas, amending the route such that the user can reach a gas station'), the time values of the procedures can be integrated into a value almost equivalent to 'anytime'. Then, as shown in FIG. 22, a new procedure containing a time value 'anytime', that is, 'anytime, near gas station, lack of gas, amending the route such that the user can reach a restaurant' is generated and the procedures are integrated into one. Thus, the capacity of the procedure database 30 can be successfully reduced.

If a procedure contains a value of either the time or place condition which can be replaced by a broader condition according to a predetermined integration condition, and the remaining conditions and actions are the same, then the procedure database management unit 70 replaces the condition values corresponding to the integration condition with a predetermined condition value as a single procedure.

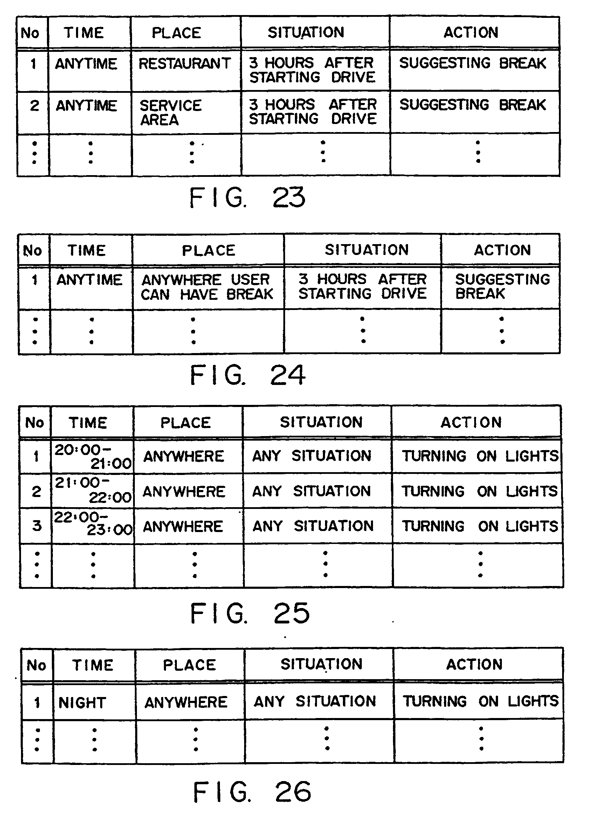

As shown in FIG. 23, when the place condition of a procedure is 'restaurant' and 'service area,' these place values can be collectively replaced with a higher order value. Then, as shown in FIG. 24, the place values of the procedure are replaced with the value 'anywhere the user can have a break' as a single condition.

In addition, as shown in FIG. 25, is the time conditions of a procedure are '20:00-21:00,' '21:00-22:00,' and '22:00-23:00,' the time values of the procedure can be replaced with a value 'at night' as a single condition as shown in FIG. 26. The time values can also be integrated into '21:00-23:00'.

On the other hand, when the condition value of a procedure refers to a too broad range, the procedure database management unit 70 rewrites the condition value of the procedure into a value for a narrower range. For example, the procedure '9:00-22:00, restaurant, any situation, displaying restaurant information' refers to a too broad range for the time condition and the situation condition. Therefore, the time value can be rewritten into '12:00-13:00/18:00-20:00' to generate a procedure '12-13/18-20, restaurant, any situation, displaying restaurant information.'

The embodiments of the present invention have been described above. Described below is an example of the data structure of the procedure database used in those embodiments.

If the procedure of the procedure database is represented by a set of items in a data format 'time, place, situation, action,' then a large volume of data having the same values for each of the time, place, situation, and action is generated, and the procedure data in the procedure database becomes redundant.

Then, as shown in FIG. 27, the procedure database contains a value defined in a condition or action without overlapping in the conditions and actions in the procedures, and each procedure is linked at least by one value for each necessary condition and action, thereby reducing the capacity of the procedure database.

For example, when there are the procedures '12:00-13:00, restaurant, at a stop, displaying restaurant information,' '18:00-20:00, restaurant, any situation, amending the route such that the user can reach the 'place',' and so on, there is no need to include in each procedure the place value 'restaurant' by including the information linking the time, place, situation and action as indicated by an arrow as shown in FIG. 27.

The link indicated by the arrow in solid lines in FIG. 27 refers to a procedure 'anytime, gas station, 10 liter of gas or less, amending the route such that the user can reach the 'place'.' Furthermore, it is troublesome to reset the apparatus according to the present invention, which has been uniquely customized for the user, each time a new version is introduced. In addition, various units and devices may be uniquely customized for the user.

Thus, the procedure database uniquely customized for the user is stored in a portable storage medium such as a PC card, an IC memory card, and so on so that it can be attached to another device for use to continuously utilize the procedure customized when the system is purchased, or to utilize the procedure customized in a device for another device.

As described above, the present invention can be applied to a car navigation system and a video recording system. It is obvious that the present invention can also be applied to a portable communications terminal, an information processing terminal, and many other devices.

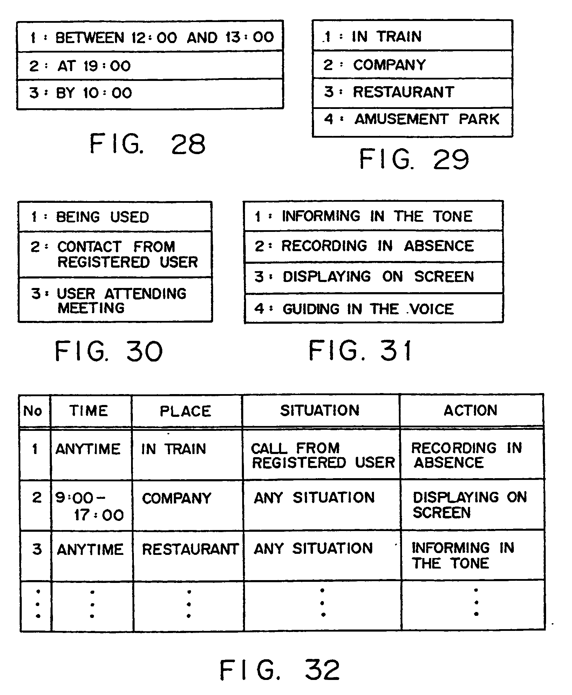

FIGS. 28 through 31 show examples of procedure database when the present invention is applied to a portable communications terminal.

FIG. 28 shows an example of a time condition in a procedure. FIG. 29 shows an example of a place condition in a procedure. FIG. 30 shows an example of a situation condition in a procedure. FIG. 31 shows an action to be taken when the condition of the procedure is satisfied. FIG. 32 shows an example of the configuration of the procedure database 3.

Each example shown in FIGS. 28 through 31 is similar to the first embodiment described by referring to FIGS. 4 through 8, or the third embodiment described by referring to FIGS. 16 through 20.

Normally, suggesting and executing an action is performed concurrently with generating procedure data. Therefore, a newly generated procedure can be immediately effective in suggesting and executing an action.

Furthermore, when a procedure is automatically generated, an operation can be entered in a database when it is repeatedly performed under the same condition. Otherwise, a procedure is generated in one operation, the frequency of the operation is recorded on the database side, and then it can be determined whether or not the procedure is to be actually entered based on the data. Furthermore, to prevent a double entry, an operation is required to prevent a procedure already stored in the database from being entered again.

In addition, the present invention can also be applied to various home electric appliances such as a video recorder, stereo, FAX, electronic range, and so on which require comparatively complicated operations. A common customizing function can be realized among these electric appliances.

If the function of the present invention can be performed, it can be applied to any system comprising one or more units, an integrated unit, or a system in which processes are performed through a network such as the LAN, WAN, and so on.

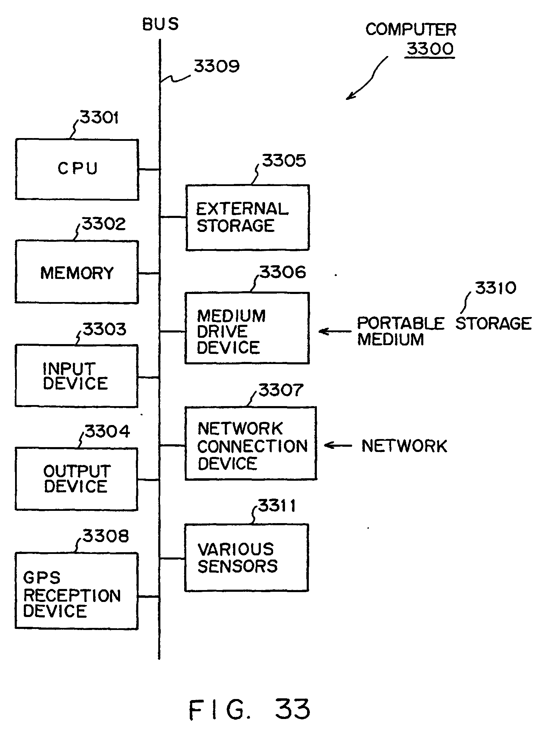

Furthermore, as shown in FIG. 33, the present invention can be realized by a system comprising a CPU 3301 connected to a bus 3309; memory 3302 such as ROM and RAM; an input device 3303 such as a button, switch, remote control unit, jog dial, touch panel keyboard, pointing device, and so on for use in inputting a user instruction and information; an output device 3304 such as a display, speaker, headphone, printer, and so on for use in outputting an inquiry and information to users; an external storage 3305, a medium drive device 3306; a portable storage medium 3310; a network connection device 3307; a GPS reception device 3308; and various sensors 3311. That is, the memory 3302 of RAM and ROM, the external storage 3305, and the bus 3309 for storing a program code of the software for realizing the system according to each of the above described embodiments, and obtained information are provided for the system or the device so that the present invention can be realized by the computer of the system or the device (or the CPU 3301 and MPU) reading the program code.

In this case, the program code read from the storage medium realizes a new function of the present invention, and the portable storage medium 3310 storing the program code is a component of the present invention.

The portable storage medium 3310 for providing a program code can be a floppy disk, a hard disk, an optical disk, a magneto-optic disk, CD-ROM, CD-R, DVD-ROM, DVD-RAM, a magnetic tape, a non-volatile memory card, a ROM card, an IC card, various storage media for storage through the network connection device 3307 (that is, a communications line) such as electronic mail, personal computer communications, and so on.

In addition, the function according to the above described embodiment can be realized by executing the program code read by a computer 3300 to the memory 3302. The function according to the above described embodiment can also be realized by, for example, the OS operating in the computer 3300 performing a part or all of the actual processes according to the instruction of the program code.

Furthermore, after the program code read from the portable storage medium 3310 is written to the memory 3302 provided in the function extending board inserted into the computer 3300, or the function extending unit connected to the computer 3300, the CPU 3301 of the function extending board or the function extending unit performs a part or all of the actual process according to the instruction of the program code. This process can also realize the function according to the above described embodiments.

The GPS reception device 3308 is used to be informed of the current position and time.

The GPS transmits the information about the Greenwich mean time from the GPS satellite operated by the U.S. Department of Defence, and the information about the elements of the orbit of the GPS satellite. Therefore, when the GPS reception device 3308 receives the electric wave transmitted from the GPS satellite, it is possible to obtain the absolute position of the GPS reception device 3308 and the current time at the position.

The various sensors 3311 are used to obtain the circumstances of the user. They converts physical, chemical, biological phenomena into electric signals, and can be, for example, a gyrosensor, an infrared sensor, a magnetic sensor, a touch sensor, an ultrasonic sensor, an optical sensor, a radioactive ray sensor, a distortion/pressure sensor, a temperature sensor, a moisture sensor, a gas sensor, an ion sensor, and so on.

### Industrial Applicability

As described above, according to the present invention, a mechanism capable of reducing the amount of operations to be performed by a user can be realized by providing the user with appropriate suggestions in response to the circumstances which change with time using information processing apparatuses assigned high level functions.

In addition, by reflecting the user operation history on a procedure database, the customization can be automatically performed based on the liking of the user.

## Claims

1. An action suggestion apparatus, comprising:
means for determining an action to be taken by searching a procedure database storing procedures containing conditions of circumstances and actions according to information about the circumstances;
means for suggesting the determined action to a user; and
means for creating or amending the procedure database based on a user action.

2. An action suggestion apparatus, comprising:
a procedure database for recording procedures containing conditions of circumstances and actions;
circumstances detection means for detecting information about the circumstances and an action operated by a user;
procedure search and determination means for searching for and determining the procedure recorded in the procedure database according to the information about the circumstances detected by said circumstances detection means;
action suggestion means for suggesting actions contained in the procedure determined by said procedure search and determination means; and
procedure data generation means for automatically generating a procedure to be recorded in the procedure database based on the condition of the circumstances corresponding to the action taken after being suggested by said action suggestion means.

3. The apparatus according to claim 2, further comprising:
procedure database management means for integrating conditions of circumstances corresponding to the same actions in a plurality of procedures recorded in the procedure database into a single procedure when the conditions match a predetermined integration condition.

4. The apparatus according to claim 2, wherein
said procedure database records a condition and a corresponding action linked as a data structure in a network format.

5. An action suggestion apparatus, comprising:
a procedure database for recording procedures containing conditions of circumstances and actions;
circumstances detection means for detecting information about the circumstances;
procedure search and determination means for searching for and determining the procedure recorded in the procedure database according to the information about the circumstances detected by said circumstances detection means;
action suggestion means for suggesting actions contained in the procedure determined by said procedure search and determination means;
behavior prediction means for comprising a list containing behavior of a user taken under the circumstances and actions to be taken in response to the behavior of the user, predicting the behavior of the user from the list according to the information about the circumstances detected by said circumstances detection means, and selecting an action corresponding to the predicted behavior; and
procedure data generation means for automatically generating a procedure to be recorded in the procedure database based on the information about the circumstances detected by said circumstances detection means and the action selected by said behavior prediction means.

6. The apparatus according to claim 5, further comprising:
procedure database management means for integrating conditions of circumstances corresponding to the same actions in a plurality of procedures recorded in the procedure database into a single procedure when the conditions match a predetermined integration condition.

7. The apparatus according to claim 5, wherein
said procedure database records a condition and a corresponding action linked as a data structure in a network format.

8. A method of suggesting an action, comprising the steps of:
determining an action to be taken by searching a procedure database storing procedures containing conditions of circumstances and actions according to information about the circumstances;
suggesting the determined action to a user; and
creating or amending the procedure database based on a user action.

9. A method of suggesting an action, comprising the steps of:
recording procedures containing conditions of circumstances and actions in a procedure database;
detecting information about the circumstances and an action operated by a user;
determining the procedure recorded in the procedure database according to the information about the circumstances detected in said circumstances detecting step;
suggesting actions contained in the procedure determined in said procedure search and determining step; and
automatically generating a procedure to be recorded in the procedure database based on the condition of the circumstances corresponding to the action taken after being suggested in said action suggesting step.

10. A method of suggesting an action, comprising:
recording procedures containing conditions of circumstances and actions in a procedure database;
detecting information about the circumstances;
searching for and determining the procedure recorded in the procedure database according to the information about the circumstances detected in said circumstances detecting step;
suggesting actions contained in the procedure determined in said procedure search and determining step;
comprising a list containing behavior of a user taken under the circumstances and actions to be taken in response to the behavior of the user, predicting the behavior of the user from the list according to the information about the circumstances detected in said circumstances detecting step, and selecting an action corresponding to the predicted behavior; and
automatically generating a procedure to be recorded in the procedure database based on the information about the circumstances detected in said circumstances detecting step and the action selected by said behavior predicting step.

11. A procedure database storage medium for use in transferring a procedure database used in a first action suggestion apparatus to a second action suggestion apparatus, said first action apparatus comprising: means for searching according to information about circumstances the procedure database storing a procedure containing conditions of the circumstances and actions, and determining an action to be taken; means for suggesting the determined action to a user; and means for creating or amending the procedure database based on a result of an action selected or executed based on an action of the user, wherein
a procedure containing a condition of the circumstances and an action is stored in a predetermined data structure in a portable storage medium.

12. The storage medium according to claim 11, wherein
said data structure is a network structure in which the condition of the circumstances is associated with a corresponding action.

13. A computer-readable storage medium storing an action suggestion program, comprising:
searching according to information about circumstances the procedure database storing a procedure containing conditions of the circumstances and actions, and determining an action to be taken;
suggesting the determined action to a user; and
creating or amending the procedure database based on an action of the user.

14. A computer-readable storage medium storing an action suggestion program, comprising:
recording procedures containing conditions of circumstances and actions in a procedure database;
detecting information about the circumstances and an action operated by a user;
determining the procedure recorded in the procedure database according to the information about the circumstances detected in said circumstances detecting step;
suggesting actions contained in the procedure determined in said procedure search and determining step; and
automatically generating a procedure to be recorded in the procedure database based on the condition of the circumstances corresponding to the action taken after being suggested in said action suggesting step.

15. A computer-readable storage medium storing an action suggestion program, comprising:
recording procedures containing conditions of circumstances and actions in a procedure database;
detecting information about the circumstances;
searching for and determining the procedure recorded in the procedure database according to the information about the circumstances detected in said circumstances detecting step;
suggesting actions contained in the procedure determined in said procedure search and determining step;
comprising a list containing behavior of a user taken under the circumstances and actions to be taken in response to the behavior of the user, predicting the behavior of the user from the list according to the information about the circumstances detected in said circumstances detecting step, and selecting an action corresponding to the predicted behavior; and
automatically generating a procedure to be recorded in the procedure database based on the information about the circumstances detected in said circumstances detecting step and the action selected by said behavior predicting step.
